# EUROPEAN PATENT SPECIFICATION

(11) **EP 4 224 349 B1**
(45) Date of publication and mention of the grant of the patent: **03.12.2025**
(21) Application number: 20956308.9
(22) Date of filing: 01.10.2020
(51) Int. Cl.: G06F 21/62, G06F 3/04886, G06F 3/04842, G06F 21/84

(54) **INFORMATION DISPLAY DEVICE, INFORMATION DISPLAY METHOD, AND RECORDING MEDIUM**
INFORMATIONSANZEIGEVORRICHTUNG, INFORMATIONSANZEIGEVERFAHREN UND AUFZEICHNUNGSMEDIUM
DISPOSITIF D'AFFICHAGE D'INFORMATIONS, PROCÉDÉ D'AFFICHAGE D'INFORMATIONS ET SUPPORT D'ENREGISTREMENT

(43) Date of publication of application: 09.08.2023
(73) Proprietor: NEC Corporation, 108-8001 Tokyo (JP)
(72) Inventor: KAMIMURA, Junichi, Tokyo 108-8001 (JP)
(74) Representative: Betten & Resch
(86) International application number: PCT/JP2020/037412
(87) International publication number: WO 2022/070380

(56) References cited:
- JP-A- 2003 312 173
- JP-A- 2010 176 437
- JP-A- 2020 024 511
- US-A1- 2014 173 450
- US-A1- 2015 242 651

## Description

### TECHNICAL FIELD

The present disclosure relates to a technical field of an information display apparatus, an information display method, and a computer program that are able to display personal information.

### BACKGROUND ART

There has been known an application that manages user personal information as digital data.

### CITATION LIST

### PATENT LITERATURE

Patent Literature 1
US 2014/173450 A1,

US 2015/242651 A1

Japanese Patent Laid-Open No. 2003-312173 A

### SUMMARY OF THE INVENTION

### PROBLEM TO BE SOLVED BY THE INVENTION

When personal information is managed as digital data, a user can present personal information to the other party by displaying the personal information on a display of a terminal (for example, a smartphone) owned by the user, without presenting a physical identification document. On the other hand, when an identification document is managed as digital data, it is required to prevent unnecessary leakage of personal information presented as digital data. Moreover, not only such personal information contained in an identification document, it is also similarly required to prevent unnecessary leakage of any personal information on a user when the personal information is managed as digital data.

An example object of the present disclosure is to provide an information display apparatus, an information display method, and a recording medium that are able to solve the above-described technical problem. As an example, an example object of the present disclosure is to provide an information display apparatus, an information display method, and a computer program that are able to display personal information while preventing unnecessary leakage of the personal information.

### MEANS FOR SOLVING THE PROBLEM

One example aspect of an information display apparatus in the present disclosure includes: a display unit; an input unit configured to receive an input for designating desired personal information that is requested to be displayed on the display unit; and a determination unit configured to determine, based on permission data designating personal information that is permitted to be displayed on the display unit, whether or not the desired personal information is able to be displayed on the display unit.

One example aspect of an information display method in the present disclosure includes: receiving an input for designating desired personal information that is requested to be displayed on a display unit; and determining, based on permission data designating personal information that is permitted to be displayed on the display unit, whether or not the desired personal information is able to be displayed on the display unit.

One example aspect of a computer program that causes a computer to execute an information display method, the information display method includes: receiving an input for designating desired personal information that is requested to be displayed on a display unit; and determining, based on permission data designating personal information that is permitted to be displayed on the display unit, whether or not the desired personal information is able to be displayed on the display unit.

### BRIEF DESCRIPTION OF THE DRAWINGS

[FIG. 1] FIG. 1 is a block diagram illustrating a configuration of an information display apparatus according to a present example embodiment.
[FIG. 2] FIG. 2 is a data structure diagram illustrating an example of a data structure of display permission data.
[FIG. 3] FIG. 3 is a flowchart illustrating a flow of personal information display operation performed by the information display apparatus.
[FIG. 4] FIG. 4 is a plan view illustrating an identification document image that is masking-processed.
[FIG. 5] FIG. 5 is a plan view illustrating an operation by a second user performed on the masking-processed identification document image.
[FIG. 6] FIG. 6 is a plan view illustrating display objects displayed in a superimposed manner on the masking-processed identification document image.
[FIG. 7] FIG. 7 is a plan view illustrating an example of a GUI (Graphical User Interface) for designating desired personal information.
[FIG. 8] FIG. 8 is a plan view illustrating an example of the GUI for designating desired personal information.
[FIG. 9] FIG. 9 is a plan view illustrating the masking-processed identification document image from which masking is partially removed.
[FIG. 10] FIG. 10 is a plan view illustrating an example of the desired personal information displayed in a display form recognizable to the second user.
[FIG. 11 FIG. 11 is a plan view illustrating an example of the desired personal information displayed in display forms recognizable to the second user.
[FIG. 12] FIG. 12 is a block diagram illustrating a configuration of an information display apparatus in a first modified example.
[FIG. 13] FIG. 13 is a plan view illustrating a GUI for designating a physical medium to be imitated by a synthetic image.

### DESCRIPTION OF EXAMPLE EMBODIMENTS

Hereinafter, an example embodiment of an information display apparatus, an information display method, and a computer program is described with reference to the drawings. In the following, a description is given of an information display apparatus 1 to which the example embodiment of the information display apparatus, the information display method, and the computer program is applied.

The information display apparatus 1 is capable of performing personal information display operation for displaying personal information on a user who owns or uses the information display apparatus 1. The personal information may include arbitrary information related to the user as an individual. For example, the personal information may include arbitrary information based on which the user can be identified. For example, the personal information may include arbitrary information linked to the user. For example, the personal information may include arbitrary information unique to the user. Examples of such personal information include at least one of information related to the name, the address, the date and year of birth, the age, the place of birth, and the family of the user, information related to a physical characteristic (for example, at least one of the height, the weight, and a face picture) of the user, information related to an occupational characteristic (for example, at least one of the current place of employment, the length of service, and a past place of employment) of the user, information related to an economic characteristic (for example, at least one of the annual income, the amount of money borrowed, the presence or absence of a house owned, a bank account number, a credit card number, and past payments) of the user, information related to an identification document (for example, at least one of the driver's license number, the individual number, and the social security number) of the user, and biological information on the user.

The information display apparatus 1 may perform the personal information display operation, for example, when a first user who owns or uses the information display apparatus 1 presents personal information on the first user to a second user who requests that the personal information on the first user be confirmed. In such a case, the first user can present the personal information on the first user to the second user by presenting, to the second user, the information display apparatus 1 on which the personal information is displayed. An example of a scenario where such personal information display operation is performed is a scenario where the first user, when purchasing a product that is age-restricted for purchase (for example, at least one of tobacco and alcohol), proves the age of the first user to the second user who is the seller of the product. Another example of the scenario where such personal information display operation is performed is a scenario where the first user, when purchasing a product with a credit card, presents information related to the card number of the credit card of the first user to the second user who is the seller of the product.

Hereinafter, the information display apparatus 1 is described in detail. In the following, a description is given of the information display apparatus 1 that performs the personal information display operation for the first user to present personal information on the first user to the second user as described above.

### (1) Configuration of Information Display Apparatus 1

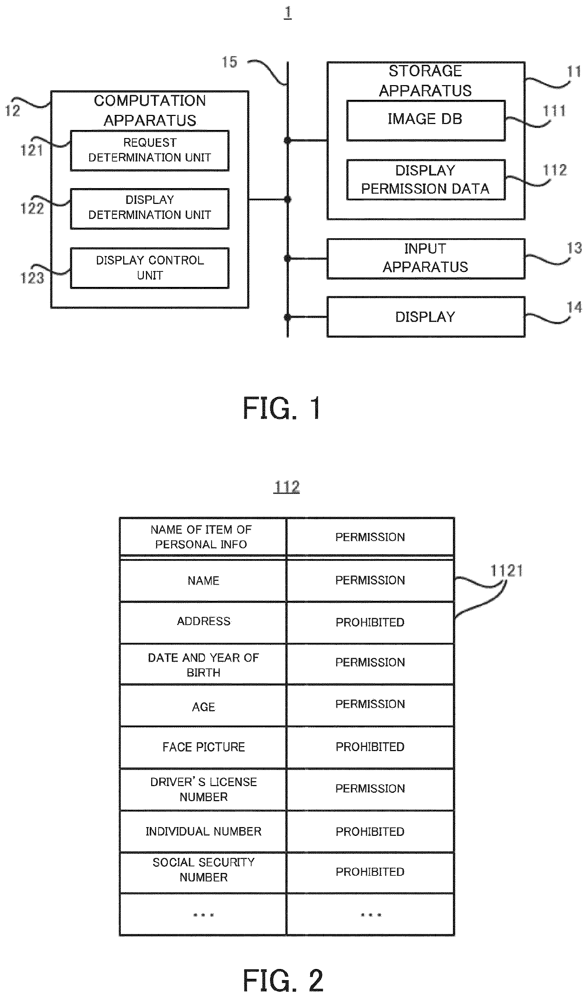

First, a configuration of the information display apparatus 1 according to the present example embodiment is described with reference to FIG. 1. FIG. 1 is a block diagram illustrating the configuration of the information display apparatus 1 according to the present example embodiment.

As illustrated in FIG. 1, the information display apparatus 1 includes a storage apparatus 11, a computation apparatus 12 that is one specific example of a "determination unit", an input apparatus 13 that is one specific example of an "input unit", and a display 14 that is one specific example of a "display unit". The storage apparatus 11, the computation apparatus 12, the input apparatus 13, and the display 14 are connected through a data bus 15.

The storage apparatus 11 can store desired data. For example, the storage apparatus 11 may temporarily store a computer program that is executed by the computation apparatus 12. The storage apparatus 11 may temporarily store data that is temporarily used by the computation apparatus 12 when the computation apparatus 12 executes the computer program. The storage apparatus 11 may store data that the information display apparatus 1 retains on a long-term basis. Note that the storage apparatus 11 may include at least one of a RAM (Random Access Memory), a ROM (Read Only Memory), a hard disk apparatus, a magneto-optical disk apparatus, an SSD (Solid State Drive), and a disk array apparatus.

In the present example embodiment, the storage apparatus 11 stores, in particular, data that is used for the personal information display operation performed by the information display apparatus 1. Specifically, the storage apparatus 11 stores an image DB (DataBase) 111, and display permission data 112 that is one specific example of "permission data".

The image DB 111 is a database storing an image containing personal information. In other words, in the present example embodiment, personal information is stored in the storage apparatus 11 as image data. However, personal information may be stored in the storage apparatus 11 in a data format that is different from image data, which will be described later in a modified example.

For example, the image DB 111 may store, as the image containing personal information, an image in which the personal information is stated in a predetermined format and that is acquired by a camera capturing the image of a physical medium owned by the first user. An example of the physical medium is an identification document of the first user. The identification document may include at least one of an arbitrary document and an arbitrary card that can prove user identification (in other words, identity or authenticity). Examples of the identification document include at least one of a driver's license, a passport, an individual number card, a certificate of residence, a certificate of family register, an ID card, and a social security card. An example of the physical medium is a medium related to family finances of the first user. Examples of the medium related to family finances of the first user include at least one of a medium for using a financial institution (for example, a bank card) and a medium used to pay money (for example, at least one of a credit card, a debit card, a loan card, and a point card). In the following, a description is continued by using an example in which the image DB 111 stores an image related to an identification document (hereinafter, referred to as "identification document image 1111") of the first user, for explanatory convenience.

The display permission data 112 is data for designating personal information that is permitted by the first user to be actually displayed by the information display apparatus 1. The display permission data 112 is generated by the first user designating permission to display, or prohibition of displaying, personal information beforehand. An example of a data structure of the display permission data 112 is illustrated in FIG. 2. As illustrated in FIG. 2, the display permission data 112 may include as many permission data units 1121, each of which indicates whether or not a certain item (in other words, a certain type) of personal information is permitted to be actually displayed by the information display apparatus 1, as the number of items of personal information. When display of personal information is not permitted, it can be said that display of the personal information is prohibited. Accordingly, it may be considered that the display permission data 112 includes as many permission data units 1121, each of which indicates whether or not a certain item of personal information is prohibited from being actually displayed by the information display apparatus 1, as the number of items of personal information. For example, in the example illustrated in FIG. 2, the display permission data 112 includes: (i) a permission data unit 1121 indicating that display of personal information related to the name is permitted (that is, not prohibited); (ii) a permission data unit 1121 indicating that display of personal information related to the address is prohibited (that is, not permitted); (iii) a permission data unit 1121 indicating that display of personal information related to the date and year of birth is permitted; (iv) a permission data unit 1121 indicating that display of personal information related to the age is permitted; (v) a permission data unit 1121 indicating that display of personal information related to the face picture is prohibited; (vi) a permission data unit 1121 indicating that display of personal information related to the driver's license number is permitted; (vii) a permission data unit 1121 indicating that display of personal information related to the individual number is prohibited; and (viii) a permission data unit 1121 indicating that display of personal information related to the social security number is prohibited.

The information display apparatus 1 displays personal information that is permitted, in the display permission data 112, to be actually displayed by the information display apparatus 1. On the other hand, the information display apparatus 1 does not display personal information that is not permitted, in the display permission data 112, to be actually displayed by the information display apparatus 1. Accordingly, even if the second user requests that personal information related to a first item (for example, the face picture) be confirmed as described above, the information display apparatus 1 does not display the personal information related to the first item when the first user who is the owner of the personal information does not permit display of the personal information related to the first item. In other words, when the second user requests that personal information related to a first item (for example, the face picture) be confirmed, the information display apparatus 1 displays the personal information related to the first item only when the first user who is the owner of the personal information permits display of the personal information related to the first item. Accordingly, unnecessary leakage of personal information, which is not intended by the first user who is the owner of the personal information, is appropriately prevented.

Referring again to FIG. 1, the computation apparatus 12 includes, for example, a CPU (Central Processing Unit). The computation apparatus 12 reads a computer program. For example, the computation apparatus 12 may read the computer program stored in the storage apparatus 11. For example, the computation apparatus 12 may read the computer program stored in a computer-readable non-transitory recording medium, by using an undepicted recording medium reading apparatus. The computation apparatus 12 may acquire (that is, may download or may read) the computer program, via an undepicted communication apparatus, from an undepicted apparatus placed outside of the information display apparatus 1. The computation apparatus 12 executes the read computer program. As a result, in the computation apparatus 12, a logical functional block is implemented for performing an operation (for example, the above-described personal information display operation) to be performed by the information display apparatus 1. In other words, the computation apparatus 12 can function as a controller for implementing the logical functional block for performing the operation to be performed by the information display apparatus 1.

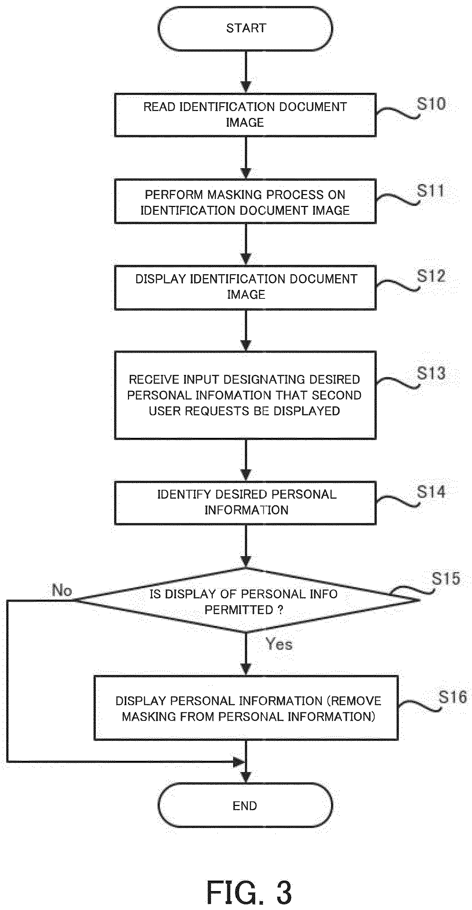

FIG. 1 illustrates examples of the logical functional block implemented in the computation apparatus 12 to perform the personal information display operation. As illustrated in FIG. 1, in the computation apparatus 12, a request identification unit 121, a display determination unit 122, and a display control unit 123 are implemented. Note that although respective operations by the request identification unit 121, the display determination unit 122, and the display control unit 123 are described in detail later with reference to FIG. 3 and others, a brief description is given below of an outline of the operations. The request identification unit 121 identifies personal information on the first user that is requested, by the second user, to be displayed by the information display apparatus 1. In other words, the request identification unit 121 identifies personal information on the first user that the second user desires to confirm. The display determination unit 122 determines, based on the display permission data 112, whether or not the personal information identified by the request identification unit 121 can be displayed on the information display apparatus 1 (specifically, the display 14). The display control unit 123 controls the display 14 in such a manner that the display 14 displays the personal information that is identified by the request identification unit 121 and that the display determination unit 122 determines can be displayed on the display 14.

The input apparatus 13 receives an input into the information display apparatus 1 from an outside of the information display apparatus 1. The input into the information display apparatus 1 may include an input from a user. The input from a user may include an input using voice. In such a case, the input apparatus 13 may include a microphone that is capable of receiving an input of voice. The input from a user may include an input related to a user operation. In such a case, the input apparatus 13 may include a user-operable operation apparatus (for example, at least one of a key board, a mouse, and a touch panel). The input into the information display apparatus 1 may include an input via a communication network. In such a case, the input apparatus 13 may include a communication apparatus. The input into the information display apparatus 1 may include an input of data. In such a case, the input apparatus 13 may include an interface apparatus that is capable of receiving an input of data.

The display 14 can display a desired image. In the present example embodiment, the display 14 displays personal information, under control of the display control unit 123 as described above.

### (2) Personal Information Display Operation Performed by Information Display Apparatus 1

Next, the personal information display operation performed by the information display apparatus 1 is described with reference to FIG. 3. FIG. 3 is a flowchart illustrating a flow of the personal information display operation performed by the information display apparatus 1.

As illustrated in FIG. 3, the display control unit 123 reads, from the image DB 111, an identification document image 1111 containing personal information to be displayed by the information display apparatus 1 (step S10). For example, the display control unit 123 may read the user-designated identification document image 1111, based on an instruction from the first user who designates the identification document image 1111. In such a case, the first user may designate the identification document image 1111 by using the input apparatus 13.

Thereafter, the display control unit 123 performs a masking process on the identification document image 1111 read in step S10 (step S11). The masking process is a process of processing at least part of the identification document image 1111 in such a manner that a user (particularly, the second user) in visual contact with the display 14 cannot recognize the personal information contained in the identification document image 1111 when the masking-processed identification document image 1111 is displayed on the display 14. In view of particularly the fact that the personal information contained in the identification document image 1111 becomes unrecognizable to a user through the masking process, the masking process may be a process of processing at least a specific image portion where the personal information appears in the identification document image 1111 in such a manner that the user (particularly, the second user) cannot recognize the personal information contained in the identification document image 1111. Examples of the masking process include at least one of a process of hiding at least the specific image portion, a process of making the resolution of at least the specific image portion coarser (that is, lower), and a process of pixelating at least the image portion.

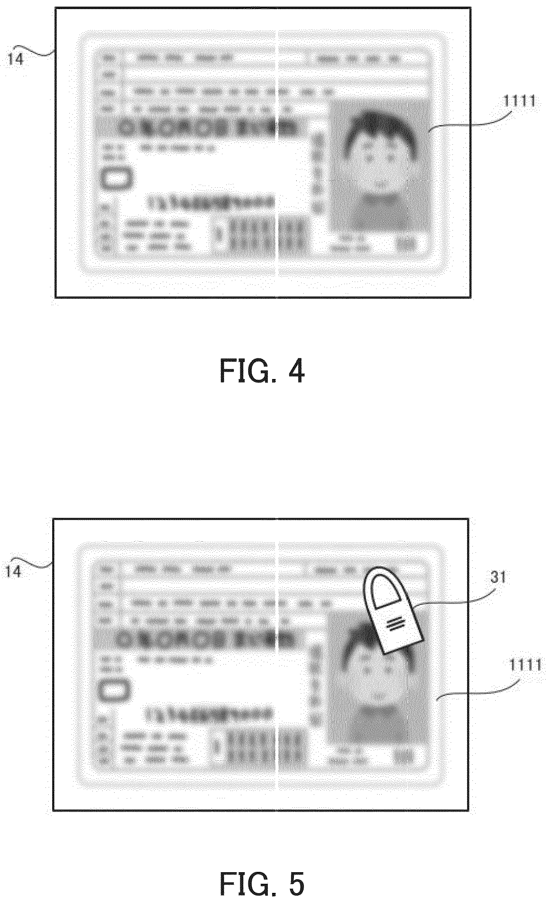

Thereafter, the display control unit 123 controls the display 14 in such a manner that the identification document image 1111 masking-processed in step S11 is displayed (step S12). As a result, the display 14 displays the masking-processed identification document image 1111, as illustrated in FIG. 4. In such a case, since the identification document image 1111 is masking-processed, the personal information contained in the identification document image 1111 is also masking-processed. Accordingly, when the identification document image 1111 is displayed in step S12, the user (particularly, the second user) cannot recognize the personal information appearing in the identification document image 1111. Thus, unnecessary leakage of the personal information, which is not intended by the first user who is the owner of the personal information, is appropriately prevented. However, the display control unit 123 may omit to control the display 14 in such a manner that the identification document image 1111 is displayed. In other words, the display 14 may omit to display the identification document image 1111.

Thereafter, the input apparatus 13 receives an input from the second user who desires to confirm personal information on the first user (step S13). Specifically, the input apparatus 13 receives the input from the second user for designating the personal information that the second user desires to confirm. Since the second user confirms the personal information displayed on the information display apparatus 1 as described above, the input apparatus 13 receives the input from the second user for designating the personal information that the second user requests be displayed on the information display apparatus 1 in a state recognizable to the second user. In other words, the input apparatus 13 receives the input from the second user for designating the personal information that is requested, by the second user, to be displayed on the information display apparatus 1 in a state recognizable to the second user.

The second user may use voice to designate the personal information that the second user desires to confirm (hereinafter, referred to as "desired personal information" as appropriate). As a result, the second user can relatively easily designate the desired personal information. In such a case, the input apparatus 13 may use the microphone included in the input apparatus 13 to receive an input of voice of the second user designating the desired personal information.

The second user may use the operation apparatus included in the input apparatus 13 to designate the desired personal information. In such a case, the input apparatus 13 may receive an input of an operation by the second user designating the desired personal information. For example, the second user may use the identification document image 1111 displayed on the display 14, to designate the desired personal information. For example, the second user may designate the desired personal information on the identification document image 1111 displayed on the display 14. As a result, the second user can intuitively designate the desired personal information via visual perception. As an example, when the input apparatus 13 includes a touch panel integrated with the display 14, the second user may select an image region where the desired personal information appears in the identification document image 1111, by using a finger 31 of the second user (or an arbitrary pointing apparatus), as illustrated in FIG. 5. In such a case, an operation of selecting the specific image portion where the desired personal information appears in the identification document image 1111 corresponds to an operation of designating the desired personal information.

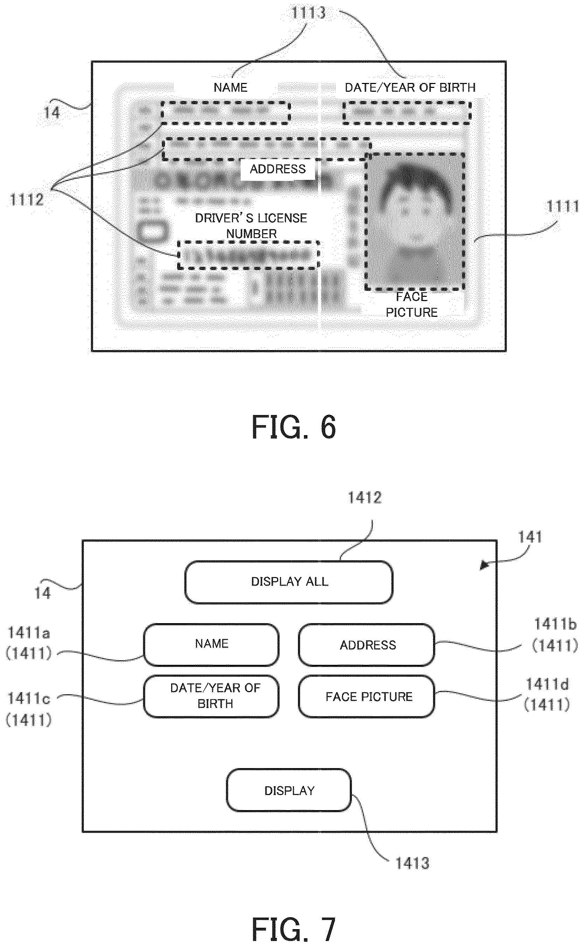

However, since the identification document image 1111 is masking-processed as described above, the second user may be unable to easily recognize where in the identification document image 1111 items of personal information appear. Accordingly, the display control unit 123 may control the display 14 in such a manner that display objects indicating where in the identification document image 1111 items of personal information appear are displayed in a superimposed manner on the identification document image 1111. For example, the display control unit 123 may display a display object 1112 that indicates the position of a specific image portion where personal information appears in the identification document image 1111, as illustrated in FIG. 6. In the example illustrated in FIG. 6, each display object 1112 is a display object in a frame-like shape enclosing a specific image portion. For example, the display control unit 123 may display a display object 1113 that indicates the name of an item of personal information appearing in the identification document image 1111, as illustrated in FIG. 6. In the example illustrated in FIG. 6, each display object 1113 is a text object indicating the name of an item of personal information.

Note that in order to display the display objects illustrated in FIG. 6, the image DB 111 may store information that can be used to display the display objects, in association with the identification document image 1111. For example, the image DB 111 may store item information related to items (in other words, types) of personal information contained in the identification document image 1111, and position-of-appearance information related to positions where the personal information appears in the identification document image 1111, as the information that can be used to display the display objects.

Alternatively, in addition to, or in place of, the identification document image 1111, the second user may use an image for designating desired personal information, to designate the desired personal information. In such a case, the second user can also intuitively designate the desired personal information via visual perception. For example, the second user may designate the desired personal information on an arbitrary image for designating desired personal information. In such a case, in addition to, or in place of, the identification document image 1111, the display control unit 123 may have the arbitrary image for designating desired personal information displayed.

The image for designating desired personal information may include an arbitrary GUI (Graphical User Interface) 141 for designating desired personal information.

An example of the GUI 141 is illustrated in FIG. 7. As illustrated in FIG. 7, the GUI 141 may include a button 1411 that the second user can depress to designate the desired personal information. In the example illustrated in FIG. 7, the GUI 141 includes: a button 1411a that the second user depresses when desiring to designate the personal information related to the name as desired personal information; a button 1411b that the second user depresses when desiring to designate the personal information related to the address as desired information; a button 1411c that the second user depresses when desiring to designate the personal information related to the date and year of birth as desired information; and a button 1411d that the second user depresses when desiring to designate the personal information related to the face picture as desired information. Further, the GUI 141 may include a button 1412 that the second user depresses when desiring to designate all the personal information contained in the identification document image 1111 as desired personal information. In other words, the GUI 141 may include the button 1412 that the second user depresses when desiring to designate each of the plurality of items of personal information as desired personal information collectively (in other words, at a time). As a result, the second user does not need to repeat an operation of designating the desired personal information many times. Further, the GUI 141 may include a button 1413 that the second user depresses when desiring to start displaying the desired personal information after the operation of designating the desired personal information is finished.

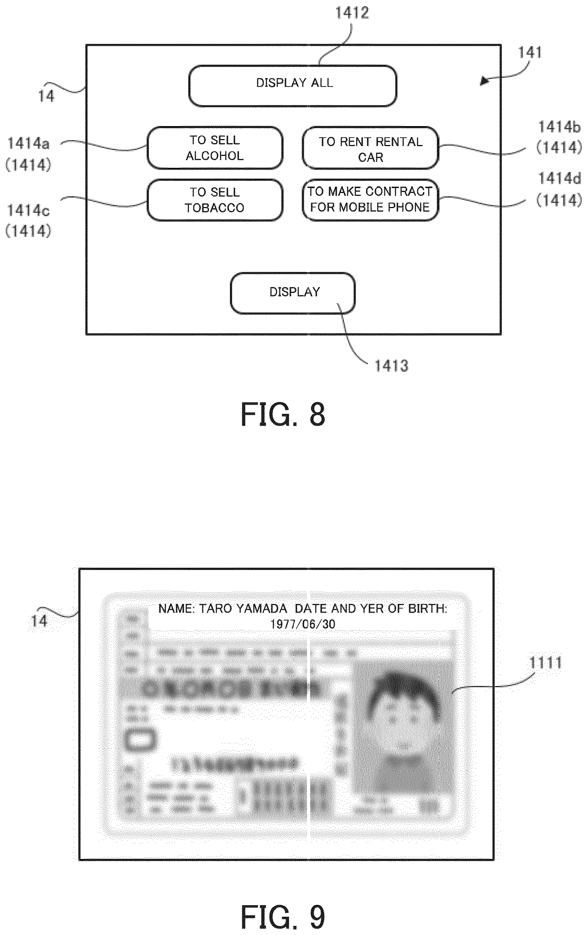

Another example of the GUI 141 is illustrated in FIG. 8. As illustrated in FIG. 8, the GUI 141 may include a button 1414 that the second user can depress to designate the desired personal information by designating a purpose of use that the second user desires to accomplish by using the personal information displayed on the information display apparatus 1. In other words, the GUI 141 may include the button 1414 that the second user can depress to designate the purpose of use of the personal information. The reason is that in many cases, the second user desires to confirm the personal information on the first user, for a certain purpose. Accordingly, it is highly probable that personal information that the second user desires to confirm (that is, desired personal information) is determined depending on a purpose of use of the personal information. Accordingly, it may be considered that the GUI 141 illustrated in FIG. 8 practically receives an input of an operation by the second user for designating the desired personal information, by receiving an input of the purpose of use of the personal information.

An example of the purpose of use of the personal information is a first purpose of use for the second user who is staff of a shop selling alcohol to determine whether or not alcohol can be sold to the first user. In such a case, the second user must desire to confirm at least one of the age and the date and year of birth of the first user. Accordingly, when the first purpose of use is selected, at least one of the age and the date and year of birth may be designated as desired personal information. An example of the purpose of use of the personal information is a second purpose of use for the second user who is staff of a car rental office to determine whether or not a rental car can be rented to the first user. In such a case, the second user must desire to confirm the name, the address, and the driver's license number of the first user. Accordingly, when the second purpose of use is selected, the name, the address, and the driver's license number may be designated as desired personal information. An example of the purpose of use of the personal information is a third purpose of use for the second user who is staff of a shop selling tobacco to determine whether or not tobacco can be sold to the first user. In such a case, the second user must desire to confirm at least one of the age and the date and year of birth of the first user. Accordingly, when the third purpose of use is selected, at least one of the age and the date and year of birth may be designated as desired personal information. An example of the purpose of use of the personal information is a fourth purpose of use for the second user who is staff of a shop selling mobile phones to determine whether or not a contract for a mobile phone subscription can be made with the first user. In such a case, the second user must desire to confirm the name, the address, and the age of the first user. Accordingly, when the fourth purpose of use is selected, the name, the address, and the age may be designated as desired personal information. FIG. 8 illustrates an example in which the GUI 141 includes four buttons 1414 for designating such first to fourth purposes of use, respectively. Specifically, in the example illustrated in FIG. 8, the GUI 141 includes: a button 1414a that the second user depresses when the second user desires to confirm the personal information on the first user for the purpose of use for the second user to determine whether or not alcohol can be sold to the first user; a button 1414b that the second user depresses when the second user desires to confirm the personal information on the first user for the purpose of use for the second user to determine whether or not a rental car can be rented to the first user; a button 1414c that the second user depresses when the second user desires to confirm the personal information on the first user for the purpose of use for the second user to determine whether or not tobacco can be sold to the first user; and a button 1414d that the second user depresses when the second user desires to confirm the personal information on the first user for the purpose of use for the second user to determine whether or not a contract for a mobile phone subscription can be made with the first user.

At least one button 1414 may be a button 1414 that the second user depresses when desiring to individually designate a single item of personal information as desired personal information. Alternatively, at least one button 1414 may be a button 1414 that the second user depresses when desiring to collectively designate each of a plurality of items of personal information as desired personal information. In the example illustrated in FIG. 8, each of the buttons 1414b and 1414d is a button 1414 that the second user depresses when desiring to collectively designate each of a plurality of items of personal information as desired personal information.

Referring again to FIG. 3, thereafter, based on contents of the input (that is, the input for designating the desired personal information that the second user desires to confirm) received by the input apparatus 13 in step S13, the request identification unit 121 identifies the desired personal information (for example, the name of an item, or the names of items, of the desired personal information) (step S14). For example, when the input apparatus 13 receives the input of voice designating the desired personal information, the request identification unit 121 may identify the desired personal information by analyzing the voice. For example, when the input apparatus 13 receives the input of an operation of destinating the desired personal information, the request identification unit 121 may identify the desired personal information by analyzing details of the operation.

As an example, the input apparatus 13 may receive an input of an operation of selecting a specific image portion where the desired personal information appears in the identification document image 1111, as described above. In such a case, the request identification unit 121 may identify a position selected by the user (that is, a position of the specific image portion) in the identification document image 1111. Thereafter, based on the item information related to an item (in other words, a type) of the personal information contained in the identification document image 1111, and on the position-of-appearance information related to the position where the personal information appears in the identification document image 1111, the request identification unit 121 may identify the personal information stated at the position of the specific image portion in the identification document image 1111. Note that the item information and the appearance information may be stored in the image DB 111 as described above.

As another example, the input apparatus 13 may receive an input of an operation of the GUI 141 to designate the desired personal information, as described above. In such a case, based on details of the operation of the GUI 141, the request identification unit 121 may identify the desired personal information. For example, the request identification unit 121 may identify at least one item or one set of items of personal information corresponding to the button 1411, 1412, or 1414 depressed by the second user, as desired personal information.

Thereafter, the display determination unit 122 determines whether or not the desired personal information identified by the request identification unit 121 in step S14 is permitted, in the display permission data 112, to be displayed by the display 14 (step S15). In other words, the display determination unit 122 determines, based on the display permission data 112, whether or not the desired personal information identified by the request identification unit 121 in step S14 can be displayed on the display 14 (step S15). For example, in a situation where the display permission data 112 illustrated in FIG. 2 is used, when the request identification unit 121 identifies the personal information related to the name as the desired personal information, the display determination unit 122 determines that the personal information related to the name is permitted in the display permission data 112 to be displayed by the display 14. In contrast, for example, in the situation where the display permission data 112 illustrated in FIG. 2 is used, when the request identification unit 121 identifies the personal information related to the address as the desired personal information, the display determination unit 122 determines that the personal information related to the address is not permitted in the display permission data 112 to be displayed by the display 14.

When it is determined, as a result of the determination in step S15, that the desired personal information is permitted to be displayed by the display 14 (that is, the desired personal information can be displayed on the display 14) (step S15: Yes), the display control unit 123 controls the display 14 in such a manner that the desired personal information is displayed in a display form recognizable to the second user (step S16).

For example, when the masking-processed identification document image 1111 is displayed in step S12 as described above, the display control unit 123 may remove masking applied to the desired personal information. On the other hand, it is preferable that the display control unit 123 not remove masking applied to different personal information from the desired personal information. As a result, the display 14 displays the identification document image 1111 in a display form in which while the desired personal information is recognizable to the second user, the different personal information from the desired personal information cannot be recognized by the second user, as illustrated in FIG. 9. FIG. 9 illustrates an example of the identification document image 1111 displayed by the display 14 when the personal information related to the name and the personal information related to the date and year of birth are designated as the desired personal information and are determined to be able to be displayed on the display 14.

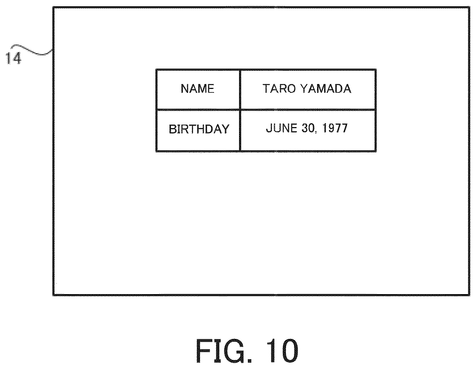

Alternatively, for example, the display control unit 123 may control the display 14 in such a manner that in addition to, or in place of, the identification document image 1111, a display object indicating a content of the desired personal information is displayed in a display form in which the desired personal information is recognizable to the second user. For example, the display control unit 123 may control the display 14 in such a manner that text objects indicating contents of the desired personal information are displayed in a display form in which the text of interest is recognizable to the second user, as illustrated in FIG. 10. In such a case, the image DB 111 may store information related to the contents of the desired personal information in association with the identification document image 1111.

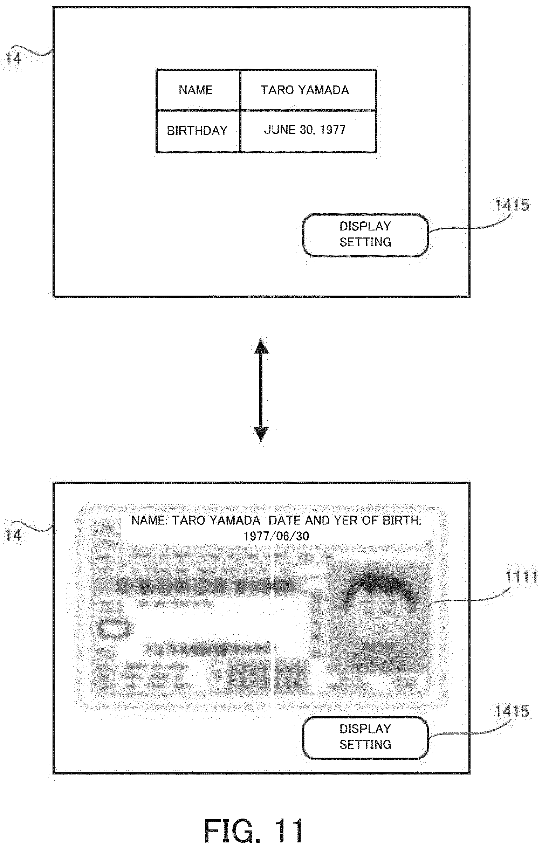

The display control unit 123 may change the display form of the desired personal information as needed. For example, the display control unit 123 may change the display form of the desired personal information between the display form illustrated in FIG. 9 and the display form illustrated in FIG. 10. In such a case, the display control unit 123 may change the display form of the desired personal information, based on an input from the first or second user, via the input apparatus 13, for instructing a change of the display form of the desired personal information. In order to receive such an input for instructing a change of the display form of the desired personal information, for example, the display control unit 123 may display a button 1415 that the first or second user can depress when making an instruction to change the display form of the desired personal information, at the same time of displaying the desired personal information, as illustrated in FIG. 11. In such a case, each time the button 1415 is depressed, the display control unit 123 may change the display form of the desired personal information from the display form illustrated in FIG. 9 to the display form illustrated in FIG. 10, or from the display form illustrated in FIG. 10 to the display form illustrated in FIG. 9.

In contrast, when it is determined, as a result of the determination in step S15, that the desired personal information is not permitted to be displayed by the display 14 (that is, the desired personal information cannot be displayed on the display 14) (step S15: No), the display control unit 123 does not perform the operation in step S16. In other words, the display control unit 123 does not control the display 14 in such a manner that the desired personal information is displayed in a display form recognizable to the second user. As a result, the second user cannot recognize the desired personal information.

### (3) Technical Effects of Information Display Apparatus 1

As described above, when the second user requests that desired personal information be confirmed, the information display apparatus 1 in the present example embodiment displays the desired personal information in a display form in which the second user can recognize the desired personal information only when the first user who is the owner of the desired personal information permits display of the desired personal information. In other words, even if the second user requests that desired personal information be confirmed, the information display apparatus 1 does not display the desired personal information in a display form in which the second user can recognize the desired personal information when the first user does not permit display of the desired personal information. Accordingly, unnecessary leakage of personal information, which is not intended by the first user who is the owner of the personal information, is appropriately prevented.

Moreover, in the present example embodiment, the information display apparatus 1 adopts the condition that an input from the second user designating desired information be received, as one of conditions for displaying the desired personal information in a display form in which the second user can recognize the desired personal information. Accordingly, even if the first user attempts to deceive the second user by simply displaying an image of an identification document of the first user on the information display apparatus 1 without performing the above-described personal information display operation, the second user can recognize that operation of the information display apparatus 1 is different from ordinary operation. In other words, the second user can recognize that operation of the information display apparatus 1 is different from ordinary operation because desired personal information is displayed on the information display apparatus 1 despite the fact that the second user does not perform an action of designating the desired information. As a result, the second user can recognize the possibility that the first user attempts to deceive the second user or falsify the identification of the first user. Accordingly, the information display apparatus 1 can also prevent falsification of the personal information attempted by the first user.

Moreover, in the present example embodiment, desired personal information that the second user desires to confirm is selectively displayed in a display form recognizable to the second user. Accordingly, in comparison with a case where all items of personal information are displayed in a display form recognizable to the second user, the second user can easily recognize desired personal information that the second user exactly desires to confirm.

### (4) Modified Examples

Next, modified examples of the information display apparatus 1 are described.

### (4-1) First Modified Example

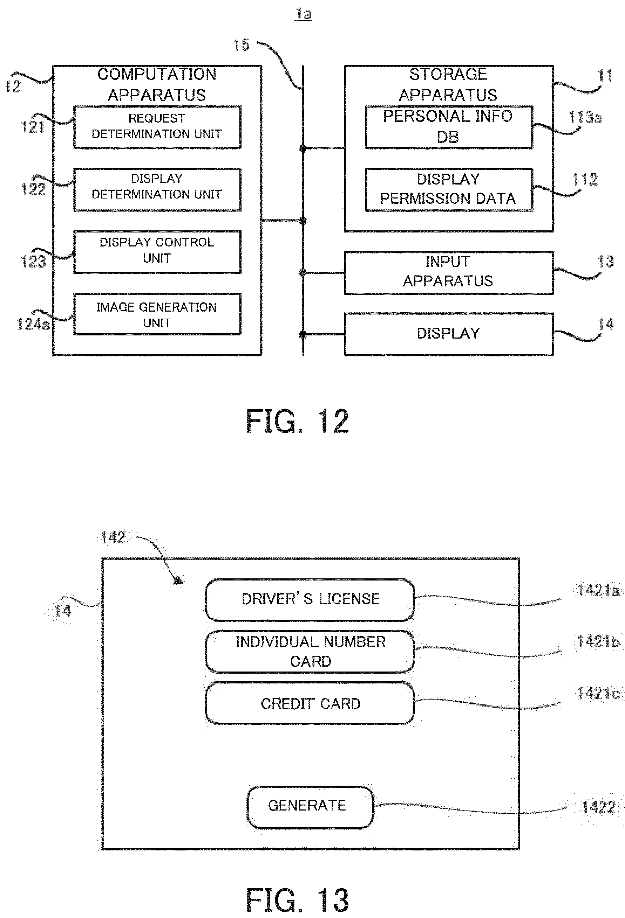

First, an information display apparatus 1 (hereinafter, referred to as "information display apparatus 1a") in a first modified example is described with reference to FIG. 12. FIG. 12 is a block diagram illustrating a configuration of the information display apparatus 1a in the first modified example.

As illustrated in FIG. 12, the information display apparatus 1a in the first modified example is different from the above-described information display apparatus 1, in that the storage apparatus 11 may store a personal information DB 113a in addition to, or in place of, the image DB 111. Further, the information display apparatus 1a is different from the above-described information display apparatus 1, in that an image generation unit 124a as a logical processing block may be implemented in the computation apparatus 12. Other characteristics of the information display apparatus 1a may be the same as the other characteristics of the information display apparatus 1.

The personal information DB 113a is different from the image DB 111, in that personal information may be stored in a different data format from image data. For example, the personal information DB 113a may store personal information as text data. For example, the personal information DB 113a may store personal information as image data. For example, the personal information DB 113a may store personal information as voice data. For example, the personal information DB 113a may store personal information in a unique data format. Accordingly, in comparison with the image DB 111, the personal information DB 113a can store various and diverse personal information.

When the storage apparatus 11 stores the personal information DB 113a as described above, the information display apparatus 1a may also perform the above-described personal information display operation as in the case where the storage apparatus 11 stores the image DB 111. In other words, when the second user requests that desired personal information be confirmed, the information display apparatus 1a may display the desired personal information in a display form in which the second user can recognize the desired personal information only when the first user permits display of the desired personal information. In other words, even if the second user requests that desired personal information be confirmed, the information display apparatus 1a does not display the desired personal information in a display form in which the second user can recognize the desired personal information when the first user does not permit display of the desired personal information. Accordingly, the information display apparatus 1a can enjoy advantageous effects similar to the advantageous effects that the information display apparatus 1 can enjoy.

The image generation unit 124a can generate an imitation image imitating a physical medium in a predetermined format containing at least one item of personal information, by using the at least one item of personal information stored in the personal information DB 113a. In other words, by using at least one item of personal information stored in the personal information DB 113a, the image generation unit 124a can generate an imitation image imitating a physical medium in which the at least one item of personal information is stated in a predetermined format and that can be physically held by a user. For example, as described above, an example of the physical medium is an identification document such as a driver's license. In such a case, the image generation unit 124a may read personal information contained in the identification document from the personal information DB 113a, and generate an imitation image that contains the read personal information and imitates the identification document. In such a case, even if the personal information DB 113a does not store image data on the physical medium, the information display apparatus 1a can display the imitation image similar to an image that can be acquired by capturing the image of the physical medium.

The image generation unit 124a may generate the imitation image, based on an input from a user (for example, the first user) designating a physical medium to be imitated by the imitation image. Specifically, for example, the display control unit 123 may display a GUI 142 for designating the physical medium to be imitated by the imitation image, as illustrated in FIG. 13. In the example illustrated in FIG. 13, the GUI 142 includes: a button 1421a that the user can depress to designate the driver's license as the physical medium to be imitated by the imitation image; a button 1421b that the user can depress to designate the individual number card as the physical medium to be imitated by the imitation image; and a button 1421c that the user can depress to designate a credit card as the physical medium to be imitated by the imitation image. Further, the GUI 142 may include a button 1422 that the user depresses when desiring to start generating the imitation image after the operation of designating the physical medium is finished.

The display control unit 123 may control the display 14 in such a manner that the imitation image generated by the image generation unit 124a is displayed. In such a case, the information display apparatus 1a may perform the above-described personal information display operation with respect to the imitation image. In other words, the information display apparatus 1a may perform the above-described personal information display operation by using the imitation image for the above-described identification document image 1111. For example, when the second user requests that desired personal information contained in the imitation image be confirmed, the imitation image may be displayed in a display form in which the second user can recognize the desired personal information only when the first user permits display of the desired personal information. In other words, even if the second user requests that desired personal information contained in the imitation image be confirmed, the information display apparatus 1a does not display the imitation image in a display form in which the second user can recognize the desired personal information when the first user does not permit display of the desired personal information. For example, the information display apparatus 1a may display the imitation image in a display form in which the second user cannot recognize the desired personal information. Accordingly, unnecessary leakage of personal information, which is not intended by the first user who is the owner of the personal information, is appropriately prevented also when the imitation image is displayed.

### (4-2) Second Modified Example

In the above description, in step S13 in FIG. 3, the input apparatus 13 receives an input from the second user for designating desired personal information that the second user desires to confirm. In contrast, in a second modified example, the input apparatus 13 may receive an input of apparatus position data related to a position of the information display apparatus 1, as an input for designating desired personal information. For example, the input apparatus 13 may receive the input of the apparatus position data from an undepicted GPS (Global Positioning System) apparatus.

When apparatus position information is inputted, the request identification unit 121 identifies (practically, estimates) desired personal information that the second user desires to confirm, based on the apparatus position data. For example, the request identification unit 121 may identify personal information that is possibly required at a position indicated by the apparatus position data, as desired personal information. For example, when a shop selling alcohol exists at a position indicated by the apparatus position data, it is supposed to be possible that the first user purchases alcohol at the position. As a result, it is supposed to be possible that the second user who is staff of the shop selling alcohol desires to confirm at least one of the age and the date and year of birth of the first user. Accordingly, in such a case, the request identification unit 121 may identify the personal information related to at least one of the age and the date and year of birth that is possibly required at the position indicated by the apparatus position data, as desired personal information.

According to the second modified example as described above, even if an input from the second user for designating desired personal information is not received, the information display apparatus 1 can identify the desired personal information, practically as in the case where the input from the second user is received.

Changes can be made to the present invention as appropriate within a scope that can be read from the claims and the specification in its entirety is not contradicted, and an information display apparatus, an information display method, and a computer program involving such changes are also included in the technical idea of the present invention.

### BRIEF DESCRIPTION OF REFERENCE NUMBERS

- 1, 1a: Information display apparatus
- 11: Storage apparatus
- 111: Image DB
- 112: Display permission data
- 113a: Personal information DB
- 12: Computation apparatus
- 121: Request identification unit
- 122: Display determination unit
- 123: Display control unit
- 124a: Image generation unit
- 13: Input apparatus
- 14: Display

## Claims

1. An information display apparatus comprising:
a storage unit (11) configured to store display permission data 112 and an image of a physical medium which comprises a plurality of items of personal information, the image being acquired by capturing by a camera;
a display unit (14) configured to apply masking to the image and display the masked image under control of a display control unit (123a) in such a manner that the masked image contains the plurality of items of personal information to which masking is applied, the masking resulting in that a user in visual contact with the display unit ( 14) cannot recognize the personal information contained in the displayed image;
the display control unit (123a);
an input unit (13) configured to receive an input for designating a desired item of personal information, among the plurality of items of personal information, that is requested to be displayed on the display unit (14), by allowing a user to select a specific image portion where the desired item of personal information appears in the displayed image;
a request identification unit (121) configured to identify the desired item of personal information based on contents of the input; and
a determination unit (122) configured to determine, based on the display permission data designating personal information that is permitted to be displayed on the display unit (14), whether or not the identified desired item of personal information is permitted to be displayed on the display unit (14),
wherein the display control unit (123) is configured to remove the masking applied to the desired item of personal information when the determination unit (122) determines that the desired item of personal information is permitted to be displayed on the display unit (14).

2. The information display apparatus according to claim 1, wherein
when the permission data designates the desired item of personal information as personal information that is permitted to be displayed on the display unit (14), the determination unit (122) is configured to determine that the desired item of personal information is permitted to be displayed on the display unit (14), and when the permission data does not designate the desired item of personal information as personal information that is permitted to be displayed on the display unit (14), the determination unit (122) is configured to determine that the desired item of personal information is not permitted to be displayed on the display unit (14).

3. The information display apparatus according to claim 1 or 2, wherein
the input unit (13) is configured to receive an input collectively designating a plurality of desired items of personal information.

4. The information display apparatus according to any one of claims 1 to 3, wherein
the input unit (13) is configured to receive an input of position data related to a position of the display unit (14), and
the determination unit (122) is configured to set an item of personal information that is required at the position indicated by the position data, as the desired item of personal information.

5. The information display apparatus according to any one of claims 1 to 4, further comprising a generation unit (124a) configured to generate, based on the desired item of personal information, an image imitating a physical medium in a predetermined format containing the desired item of personal information,
wherein the display control unit (123) is configured (i) when the determination unit (122) determines that the desired item of personal information is permitted to be displayed on the display unit (14), to display the image in a display form in which the desired item of personal information is recognizable to a user in visual contact with the display unit (14), and (ii) when the determination unit (122) determines that the desired item of personal information is not permitted to be displayed on the display unit (14), not to display the image in the display form in which the desired item of personal information is recognizable to the user.

6. The information display apparatus according to any one of claims 1 to 5, wherein
the display control unit (123) is able to change a display form of the desired item of personal information.

7. An information display method comprising:
storing display permission data and an image of a physical medium which comprises a plurality of items of personal information, the image being acquired by capturing by a camera;
masking the image and displaying the masked image on a display unit (14) in such a manner that the masked image contains the plurality of items of personal information to which masking is applied, the masking resulting in that a user in visual contact with the display unit (14) cannot recognize the personal information contained in the displayed image;
receiving an input for designating a desired item of personal information, among the plurality of items of personal information, that is requested to be displayed on the display unit (14), by allowing a user to select a specific image portion where the desired item of personal information appears in the displayed image;
identifying the desired item of personal information based on contents of the input;
determining, based on the display permission data designating personal information that is permitted to be displayed on the display unit (14), whether or not the identified desired item of personal information is permitted to be displayed on the display unit (14); and
removing the masking applied to the desired item of personal information when it is determined that the desired item of personal information is permitted to be displayed on the display unit (14).

8. A computer program that causes a computer comprising a storage unit, a display unit and an input unit to execute the information display method according to claim 7.

## Patentansprüche

1. Informationsanzeigevorrichtung, umfassend:
eine Speichereinheit (11), die konfiguriert ist, um Anzeigeberechtigungsdaten 112 und ein Bild eines physischen Mediums, das eine Vielzahl von Elementen persönlicher Information umfasst, zu speichern, wobei das Bild durch Erfassen durch eine Kamera erlangt wird;
eine Anzeigeeinheit (14), die konfiguriert ist, um ein Maskieren auf das Bild anzuwenden und das maskierte Bild unter Steuerung einer Anzeigesteuereinheit (123a) auf derartige Weise anzuzeigen, dass das maskierte Bild die Vielzahl von Elementen persönlicher Information enthält, auf die ein Maskieren angewendet ist, wobei das Maskieren darin resultiert, dass ein Benutzer in Sichtkontakt mit der Anzeigeeinheit (14) die im angezeigten Bild enthaltene persönliche Information nicht erkennen kann;
die Anzeigesteuereinheit (123a);
eine Eingabeeinheit (13), die konfiguriert ist, um eine Eingabe zum Bezeichnen eines gewünschten Elements persönlicher Information unter der Vielzahl von Elementen persönlicher Information zu empfangen, für das angefordert ist, auf der Anzeigeeinheit (14) angezeigt zu werden, indem es einem Benutzer ermöglicht wird, einen spezifischen Bildabschnitt auszuwählen, in dem das gewünschte Element persönlicher Information im angezeigten Bild erscheint;
eine Anforderungsidentifikationseinheit (121), die konfiguriert ist, um das gewünschte Element persönlicher Information basierend auf Inhalten der Eingabe zu identifizieren; und
eine Bestimmungseinheit (122), die konfiguriert ist, um basierend auf den Anzeigeberechtigungsdaten, die persönliche Information bezeichnen, die auf der Anzeigeeinheit (14) angezeigt werden darf, zu bestimmen, ob das identifizierte gewünschte Element persönlicher Information auf der Anzeigeeinheit (14) angezeigt werden darf oder nicht,
wobei die Anzeigesteuereinheit (123) konfiguriert ist, um das auf das gewünschte Element persönlicher Information angewendete Maskieren zu entfernen, wenn die Bestimmungseinheit (122) bestimmt, dass das gewünschte Element persönlicher Information auf der Anzeigeeinheit (14) angezeigt werden darf.

2. Informationsanzeigevorrichtung nach Anspruch 1, wobei
die Bestimmungseinheit (122) dann, wenn die Berechtigungsdaten das gewünschte Element persönlicher Information als persönliche Information bezeichnen, die auf der Anzeigeeinheit (14) angezeigt werden darf, konfiguriert ist, um zu bestimmen, dass das gewünschte Element persönlicher Information auf der Anzeigeeinheit (14) angezeigt werden darf, und
die Bestimmungseinheit (122) dann, wenn die Berechtigungsdaten das gewünschte Element persönlicher Information nicht als persönliche Information bezeichnen, die auf der Anzeigeeinheit (14) angezeigt werden darf, konfiguriert ist, um zu bestimmen, dass das gewünschte Element persönlicher Information nicht auf der Anzeigeeinheit (14) angezeigt werden darf.

3. Informationsanzeigevorrichtung nach Anspruch 1 oder 2, wobei
die Eingabeeinheit (13) konfiguriert ist, um eine Eingabe zu empfangen, die insgesamt eine Vielzahl von gewünschten Elementen persönlicher Information bezeichnet.

4. Informationsanzeigevorrichtung nach einem der Ansprüche 1 bis 3, wobei
die Eingabeeinheit (13) konfiguriert ist, um eine Eingabe von Positionsdaten in Bezug auf eine Position der Anzeigeeinheit (14) zu empfangen, und
die Bestimmungseinheit (122) konfiguriert ist, um ein Element persönlicher Information, das bei der durch die Positionsdaten angezeigten Position erforderlich ist, als das gewünschte Element persönlicher Information einstellt.

5. Informationsanzeigevorrichtung nach einem der Ansprüche 1 bis 4, die weiterhin eine Erzeugungseinheit (124a) umfasst, die konfiguriert ist, um basierend auf dem gewünschten Element persönlicher Information ein Bild zu erzeugen, das ein physisches Medium in einem vorbestimmten Format imitiert, das das gewünschte Element persönlicher Information enthält,
wobei die Anzeigesteuereinheit (123) konfiguriert ist, (i) um dann, wenn die Bestimmungseinheit (122) bestimmt, dass das gewünschte Element persönlicher Information auf der Anzeigeeinheit (14) angezeigt werden darf, das Bild in einer Anzeigeform anzuzeigen, in der das gewünschte Element persönlicher Information für einen Benutzer in Sichtkontakt mit der Anzeigeeinheit (14) erkennbar ist, und (ii) um dann, wenn die Bestimmungseinheit (122) bestimmt, dass das gewünschte Element persönlicher Information nicht auf der Anzeigeeinheit (14) angezeigt werden darf, das Bild nicht in der Anzeigeform anzuzeigen, in der das gewünschte Element persönlicher Information für den Benutzer erkennbar ist.

6. Informationsanzeigevorrichtung nach einem der Ansprüche 1 bis 5, wobei
die Anzeigesteuereinheit (123) in der Lage ist, eine Anzeigeform des gewünschten Elements persönlicher Information zu ändern.

7. Informationsanzeigeverfahren, umfassend:
Speichern von Anzeigeberechtigungsdaten 112 und eines Bildes eines physischen Mediums, das eine Vielzahl von Elementen persönlicher Information umfasst, wobei das Bild durch Erfassen durch eine Kamera erlangt wird;
Maskieren des Bildes und Anzeigen des maskierten Bildes auf einer Anzeigeeinheit (14) auf derartige Weise, dass das maskierte Bild die Vielzahl von Elementen persönlicher Information enthält, auf die ein Maskieren angewendet ist, wobei das Maskieren darin resultiert, dass ein Benutzer in Sichtkontakt mit der Anzeigeeinheit (14) die im angezeigten Bild enthaltene persönliche Information nicht erkennen kann;
Empfangen einer Eingabe zum Bezeichnen eines gewünschten Elements persönlicher Information unter der Vielzahl von Elementen persönlicher Information, für das angefordert ist, auf der Anzeigeeinheit (14) angezeigt zu werden, indem es einem Benutzer ermöglicht wird, einen spezifischen Bildabschnitt auszuwählen, in dem das gewünschte Element persönlicher Information im angezeigten Bild erscheint;
Identifizieren des gewünschten Elements persönlicher Information basierend auf Inhalten der Eingabe;
basierend auf den Anzeigeberechtigungsdaten, die persönliche Information bezeichnen, die auf der Anzeigeeinheit (14) angezeigt werden darf, Bestimmen, ob das identifizierte gewünschte Element persönlicher Information auf der Anzeigeeinheit (14) angezeigt werden darf oder nicht; und
Entfernen des auf das gewünschte Element persönlicher Information angewendeten Maskierens, wenn bestimmt wird, dass das gewünschte Element persönlicher Information auf der Anzeigeeinheit (14) angezeigt werden darf.

8. Computerprogramm, das veranlasst, dass ein Computer, der eine Speichereinheit, eine Anzeigeeinheit und eine Eingabeeinheit umfasst, das Informationsanzeigeverfahren nach Anspruch 7 ausführt.

## Revendications

1. Appareil d'affichage d'informations comportant :
une unité de stockage (11) configurée pour stocker des données d'autorisation d'affichage (112) et
une image d'un support physique qui comporte une pluralité d'éléments d'informations personnelles, l'image étant acquise par la capture par une caméra ;
une unité d'affichage (14) configurée pour appliquer un masquage à l'image et afficher l'image masquée sous la commande d'une unité de commande d'affichage (123a) de manière à ce que l'image masquée contienne la pluralité d'éléments d'informations personnelles auxquels un masquage est appliqué, le masquage ayant pour résultant qu'un utilisateur en contact visuel avec l'unité d'affichage (14) ne peut pas reconnaître les informations personnelles contenues dans l'image affichée ;
l'unité de commande d'affichage (123a) ;
une unité d'entrée (13) configurée pour recevoir une entrée pour désigner un élément d'informations personnelles souhaité, parmi la pluralité d'éléments d'informations personnelles, dont l'affichage est demandé sur l'unité d'affichage (14), en permettant à un utilisateur de sélectionner une partie d'image spécifique où l'élément d'informations personnelles souhaité apparaît dans l'image affichée ;
une unité d'identification de demande (121) configurée pour identifier l'élément d'informations personnelles souhaité sur la base du contenu de l'entrée ; et
une unité de détermination (122) configurée pour déterminer, sur la base des données d'autorisation d'affichage désignant des informations personnelles qui sont autorisées à être affichées sur l'unité d'affichage (14), si l'élément d'informations personnelles souhaité identifié est autorisé ou non à être affiché sur l'unité d'affichage (14),
dans lequel l'unité de commande d'affichage (123) est configurée pour supprimer le masquage appliqué à l'élément d'informations personnelles souhaité lorsque l'unité de détermination (122) détermine que l'élément d'informations personnelles souhaité est autorisé à être affiché sur l'unité d'affichage (14).

2. Appareil d'affichage d'informations selon la revendication 1, dans lequel lorsque les données d'autorisation désignent l'élément d'informations personnelles souhaité comme des informations personnelles qui sont autorisées à être affichées sur l'unité d'affichage (14), l'unité de détermination (122) est configurée pour déterminer que l'élément d'informations personnelles souhaité est autorisé à être affiché sur l'unité d'affichage (14), et
lorsque les données d'autorisation ne désignent pas l'élément d'informations personnelles souhaité comme des informations personnelles qui sont autorisées à être affichées sur l'unité d'affichage (14), l'unité de détermination (122) est configurée pour déterminer que l'élément d'informations personnelles souhaité n'est pas autorisé à être affiché sur l'unité d'affichage (14).

3. Appareil d'affichage d'informations selon la revendication 1 ou 2, dans lequel
l'unité d'entrée (13) est configurée pour recevoir une entrée désignant collectivement une pluralité d'éléments d'informations personnelles souhaités.

4. Appareil d'affichage d'informations selon l'une quelconque des revendications 1 à 3, dans lequel
l'unité d'entrée (13) est configurée pour recevoir une entrée de données de position liées à une position de l'unité d'affichage (14), et
l'unité de détermination (122) est configurée pour définir un élément d'informations personnelles qui est demandé à la position indiquée par les données de position, comme l'élément d'informations personnelles souhaité.

5. Appareil d'affichage d'informations selon l'une quelconque des revendications 1 à 4, comportant en outre une unité de génération (124a) configurée pour générer, sur la base de l'élément d'informations personnelles souhaité, une image imitant un support physique dans un format prédéterminé contenant l'élément d'informations personnelles souhaité,souhaité,
dans lequel l'unité (123) de commande d'affichage est configurée (i) lorsque l'unité de détermination (122) détermine que l'élément d'informations personnelles souhaité est autorisé à être affiché sur l'unité d'affichage (14), pour afficher l'image sous une forme d'affichage dans laquelle l'élément d'informations personnelles souhaité est reconnaissable par un utilisateur en contact visuel avec l'unité d'affichage (14), et (ii) lorsque l'unité de détermination (122) détermine que l'élément d'informations personnelles souhaité n'est pas autorisé à être affiché sur l'unité d'affichage (14), pour ne pas afficher l'image dans la forme d'affichage dans laquelle l'élément d'informations personnelles souhaité est reconnaissable par l'utilisateur.

6. Appareil d'affichage d'informations selon l'une quelconque des revendications 1 à 5, dans lequel
l'unité de commande d'affichage (123) peut modifier une forme d'affichage de l'élément d'informations personnelles souhaité.

7. Procédé d'affichage d'informations comportant :
le stockage de données d'autorisation d'affichage et d'une image d'un support physique qui comporte une pluralité d'éléments d'informations personnelles, l'image étant acquise par la capture par une caméra ;
le masquage de l'image et l'affichage de l'image masquée sur une unité d'affichage (14) de manière à ce que l'image masquée contienne la pluralité d'éléments d'informations personnelles auxquels un masquage est appliqué, le masquage entraînant qu'un utilisateur en contact visuel avec l'unité d'affichage (14) ne peut pas reconnaître les informations personnelles contenues dans l'image affichée ;
la réception d'une entrée pour désigner un élément d'informations personnelles souhaité, parmi la pluralité d'éléments d'informations personnelles, dont l'affichage est demandé sur l'unité d'affichage (14), en permettant à un utilisateur de sélectionner une partie d'image spécifique où l'élément d'informations personnelles souhaité apparaît dans l'image affichée ;
l'identification de l'élément d'informations personnelles souhaité sur la base du contenu de l'entrée ;
le fait de déterminer, sur la base des données d'autorisation d'affichage désignant des informations personnelles qui sont autorisées à être affichées sur l'unité d'affichage (14), si l'élément d'informations personnelles souhaité identifié est autorisé ou non à être affiché sur l'unité d'affichage (14) ; et
le retrait du masquage appliqué à l'élément d'informations personnelles souhaité lorsqu'il est déterminé que l'élément d'informations personnelles souhaité est autorisé à être affiché sur l'unité d'affichage (14).

8. Programme informatique qui amène un ordinateur comportant une unité de stockage, une unité d'affichage et une unité d'entrée à exécuter le procédé d'affichage d'informations selon la revendication 7.
